# EUROPEAN PATENT SPECIFICATION

(11) **EP 3 972 743 B1**
(45) Date of publication and mention of the grant of the patent: **25.09.2024**
(21) Application number: 20728937.2
(22) Date of filing: 18.05.2020
(51) Int. Cl.: B05C 17/00, B05C 17/005, B29C 65/52, B05C 3/18

(54) **AN ADHESIVE DEPOSITION TOOL FOR APPLYING STRUCTURAL ADHESIVE TO A WIND TURBINE BLADE COMPONENT**
KLEBSTOFFABSCHEIDUNGSWERKZEUG ZUM AUFTRAGEN VON STRUKTURKLEBSTOFF AUF EINE WINDTURBINENSCHAUFELKOMPONENTE
OUTIL DE DÉPÔT D'ADHÉSIF POUR APPLIQUER UN ADHÉSIF STRUCTURAL À UN COMPOSANT DE PALE D'ÉOLIENNE

(30) Priority: 21.05.2019 DK PA201970320
(43) Date of publication of application: 30.03.2022
(73) Proprietor: VESTAS WIND SYSTEMS A/S, 8200 Aarhus N (DK)
(72) Inventor: LEWIS, Paul, Newport PO30 5AP (GB)
(74) Representative: Vestas Patents Department
(86) International application number: PCT/DK2020/050141
(87) International publication number: WO 2020/233760

(56) References cited:
- EP-A1- 3 378 571
- JP-A- 2016 107 190
- US-A1- 2018 333 739

## Description

### TECHNICAL FIELD

The present disclosure relates a tool for applying adhesive to a component of a wind turbine blade. In particular, it relates to the deposition of a bead of a structural adhesive onto an application surface of the component.

### BACKGROUND

Typically, wind turbine blades are manufactured in two halves, or shells, which are adhesively bonded together along the leading and trailing edges of the blade. A shear web structure is provided between the shell halves.

Structural adhesive is used to bond the inner surfaces of the shells to the shear web structure, and to bond the edges of the shells together. It will be appreciated that the adhesive bonds provide critical connections between the various components of the blade, and that the bonds must therefore have extremely high integrity to withstand the high forces and fatigue loads experienced in operation. To this end, the process of creating adhesive bonds during production of wind turbine blades must be highly repeatable and robust.

It is known to apply adhesive to a surface of a wind turbine blade component using an adhesive deposition tool. Adhesive is supplied to the adhesive deposition tool at a constant flow rate and an operator moves the tool along an application surface of a first component, for example the inner surface of a blade shell, to deposit a continuous elongate bead of adhesive onto the surface. A second component, for example a web foot, to be adhered to the first component, is then placed on top of the adhesive bead and the assembly is cured to form an adhesive bond.

It has been found in practice that known adhesive deposition tools can produce adhesive beads having inconsistent cross-sections and thicknesses. Such inconsistencies negatively affect the repeatability and consistency of the bonding process.

It is against this background that the present invention has been developed.

JP2016107190 describes a sealant application nozzle and a sealant application method. The sealant is applied to stepped portions created by the bonding of two members to each other. EP3378571 describes a dispenser for applying a structural adhesive to a wind turbine blade structure.

### SUMMARY OF INVENTION

According to an aspect of the invention, there is provided an adhesive deposition tool according to claim 1.

Preferably, the top portion comprises a first baffle downwardly pitched towards the front of the tool.

In addition, or alternative to the first baffle of the top portion, at least one of the two side portions may comprise a baffle inwardly pitched towards the front of the tool.

Preferably, the side portions forwardly extend ahead of the front end of the chamber.

The top portion comprises a baffle downwardly pitched towards the rear of the tool so as to decrease the height of the chamber towards the rear end of the chamber. This baffle of the top portion is referred to herein as the "second baffle".

Preferably, the height of the chamber at the front and rear ends of the chamber is substantially equal.

Preferably, the cross-sectional areas of the front and rear ends of the chamber are substantially equal.

Alternatively, the cross-sectional area of the front end of the chamber is smaller than the cross-sectional area of the rear end of the chamber.

Alternatively, the cross-sectional area of the front end of the chamber is greater than the cross-sectional area of the rear end of the chamber.

Preferably, the second baffle is configured such that the height of the chamber continuously decreases towards the rear end of the chamber.

Preferably, the top portion and/or the at least one side portion is configured such that the height and/or the width of the chamber continuously decreases towards the front end of the chamber.

Preferably, the top portion and/or the at least one side portion is configured such that the height and/or the width of the chamber increases and subsequently decreases towards the front end of the chamber.

Preferably, the tool further comprises a profiler having a cut-out profile portion.

Preferably, the cut-out profile portion of the profiler defines the rear end of the chamber.

Preferably, the overall length of the tool is greater than 180mm.

Preferably, the tool further comprises an elongate handle defining the supply channel, wherein the elongate handle is configured to rearwardly extend away from the front end of the chamber.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more examples of the invention will now be described, by way of example only, with reference to the accompanying drawings, in which:
FIG. 1 shows structural adhesive being deposited on an application surface of a wind turbine blade component using a known adhesive deposition tool;
FIG. 2a is a rear perspective view of the adhesive deposition tool of FIG. 1;
FIG. 2b is a cross-sectional view of the adhesive deposition tool of FIG. 1 along its longitudinal axis;
FIG. 3a is a cross-sectional view of the adhesive deposition tool of FIG. 1 along its longitudinal axis including a general illustration of how the adhesive flows within the tool when the tool is stationary;
FIG. 3b is a cross-sectional view of the adhesive deposition tool of FIG. 1 along its longitudinal axis including a general illustration of how the adhesive flows within the tool when the tool is moved along the application surface;
FIG. 3c is a plan view of a bead of structural adhesive deposited on the application surface by the tool of FIG. 1;
FIG. 4a is a rear perspective view of an example of an adhesive deposition tool in accordance with the invention;
FIG. 4b is a cross-sectional view of the adhesive deposition tool of FIG. 4a along its longitudinal axis;
FIG. 5a is a rear perspective view of a second example of an adhesive deposition tool in accordance with the invention;
FIG. 5b is a plan view of the adhesive deposition tool of FIG. 5a; and,
FIG. 5c is a cross-sectional view of the adhesive deposition tool of FIG. 5a along its longitudinal axis.

In the drawings, like features are denoted by like reference signs.

### DETAILED DESCRIPTION

The following detailed description refers to the accompanying drawings that show, by way of illustration, specific details and examples in which the invention may be practiced. These examples are described in sufficient detail to enable those skilled in the art to practice the invention. Other examples may be utilised, and structural changes may be made without departing from the scope of the invention as defined in the appended claims. Moreover, references in the following description to "upper", "lower" and any other terms having an implied orientation are not intended to be limiting, and refer only to the orientation of the features as shown in the accompanying drawings.

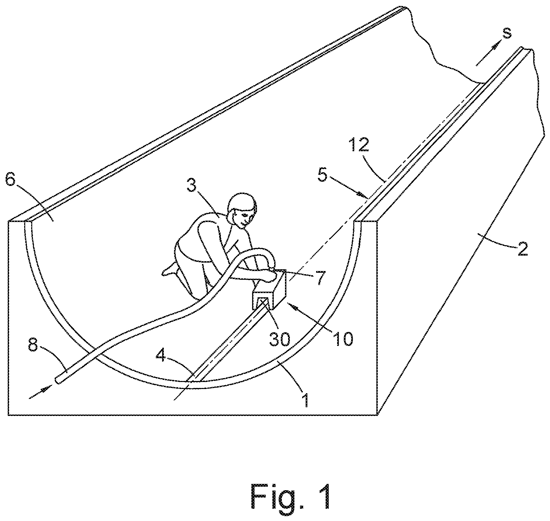

FIG. 1 illustrates a component of a wind turbine blade, in the form of a wind turbine blade half shell 1 (hereinafter, "the half shell 1"), supported in a blade mould 2. The half shell 1 may form a windward half or a leeward half of a wind turbine blade. An operator 3 is shown depositing a bead of structural adhesive 4 (hereinafter, "the bead of adhesive 4") on an application surface 5 of the half shell 1 using a known adhesive deposition tool 10. In this example, the application surface 5 forms part of an inner surface 6 of the half shell 1 and the bead of adhesive 4 is used to bond a shear web (not shown) to the inner surface 6.

The adhesive deposition tool 10 comprises an elongate handle 7, to which a supply hose 8 is connected for delivering a continuous supply of structural adhesive to the tool 10. The elongate handle 7 is used by the operator 3 to push the tool 10 along the application surface 5 of the half shell 1 in a spanwise direction (indicated by arrow S). That is to say, the tool 10 is pushed along the length of the half shell 1. As the tool 10 is moved, the bead of adhesive 4 is dispensed in its wake.

The tool 10 is moved over the application surface 5 along a predefined adhesive deposition path 12, which is indicated on the inner surface 6 of the half shell 1. The adhesive deposition path 12 indicates the precise location at which the structural adhesive should be deposited in accordance with the design specification of the wind turbine blade. The adhesive deposition path 12 may be indicated on the inner surface 6 of the half shell 1 by means of laser projection. Alternatively, or additionally, the adhesive deposition path 12 may be physically marked on the inner surface 6 of the half shell 1 using a pen or pencil, or the like. The adhesive deposition path 12 therefore indicates a predefined path along which the tool 10 must be moved. A physical guide (not shown), attached to the inner surface 6 of the half shell 1 adjacent the adhesive deposition path 12, might also be used for guiding the tool 10 along the adhesive deposition path 12. The physical guide is arranged parallel to the adhesive deposition path 12 and is spaced apart therefrom by a predetermined distance. The physical guide extends longitudinally in the spanwise direction along the whole or part of the length of the half shell 1.

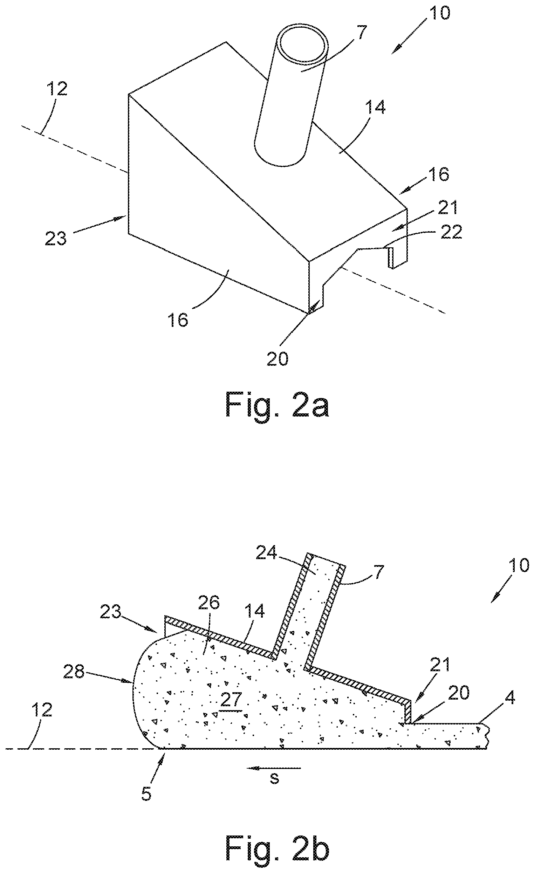

With reference to FIG. 2a, the tool 10 comprises a top portion 14, two parallel side portions 16, the elongate handle 7, located substantially on the longitudinal axis of the tool 10, and an adhesive profiler 20. The adhesive profiler 20 is located at the rear end 21 of the tool 10 and comprises a rectilinear cur-out profile 22, generally in the shape of a house, for profiling the structural adhesive as it is deposited from the tool 10 onto the application surface 5. The front end 23 of the tool 10 is open. That is, the tool 10 does not include a feature to restrict the flow of structural adhesive from its front end 23.

Turning to FIG. 2b, the handle 7 defines a supply channel 24 for supplying structural adhesive 27 (hereinafter, "the adhesive 27") to a chamber 26 that is defined within the volume of the tool 10 by the interior surfaces of the top and side portions 14, 16, and the adhesive profiler 20. The top portion 14 is configured to slope upwardly from the rear to the front end 21, 23 of the tool 10, progressively increasing the height, and so the cross-sectional area, of the chamber 26 towards the front end 23 of the tool 10. In use, the adhesive 27 is supplied to the chamber 26 through the supply hose 8 and then the supply channel 24. The adhesive 27 is allowed to largely fill the chamber 26 before the tool 10 is moved by the operator 3 along the adhesive deposition path 12 in the direction S. As the tool 10 is moved, the adhesive 27 exits the tool 10 through the cut-out profile 22 of the adhesive profiler 20 to form the bead of adhesive 4 on the application surface 5. Due to the high viscosity of the adhesive 27 at typical application temperatures of around 15°C to around 30°C, the bead of adhesive 4 generally retains the shape of the cut-out profile 22 of the adhesive profiler 20 after it has been deposited on the application surface 5.

Due to profile of the top portion 14, configured to slope upwardly from the rear to the front end 21, 23 of the tool 10, a large proportion of the adhesive 27 entering the chamber 26 from the supply channel 24 tends firstly to flow towards the front end 23 of the tool 10, following the path of least resistance. This flow pattern causes the adhesive 27 to form a rounded nose 28 at the front end 23 of tool 10, flowing downwards from the top portion 14 of the tool 10 towards the application surface 5. This establishes a number of drawbacks with using the known tool 10. For example, during the application of the adhesive 27, it is desirable that the operator 3 controls the movement of the tool 10 so as to apply the adhesive 27 to the application surface 5 at approximately the same rate as it is supplied to the tool 10. If the application rate of the adhesive 27 is below the supply rate, the rounded nose 28 of the adhesive 27 extends further forward of the front end 23 of the tool 10. This can cause some of the adhesive 27, forming the rounded nose 28, to work its way underneath the side portions 14, 16 as the tool 10 is moved along the adhesive deposition path 12. That is, some of the adhesive 27 gets drawn in between the bottom surfaces of the side portions 14, 16 and the application surface 5 as the tool 10 is moved along the adhesive deposition path 12. This creates strips of adhesive 27 either side of the bead of adhesive 4, which need to be removed before the shear web can be bonded to the inner surface 6 of the half shell 1, adding to the workload of the operator 3 and generating wasted adhesive 27.

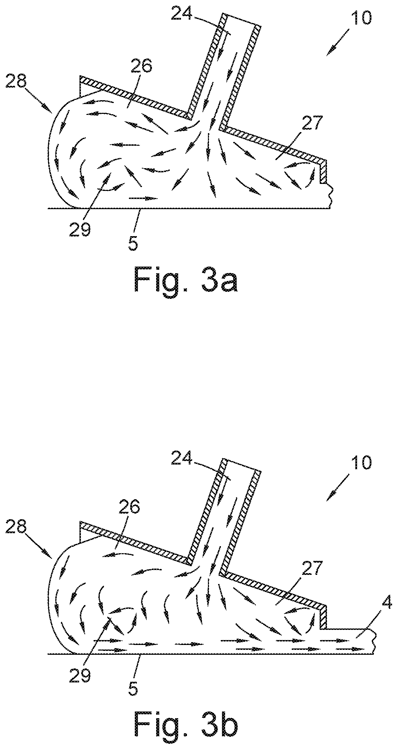

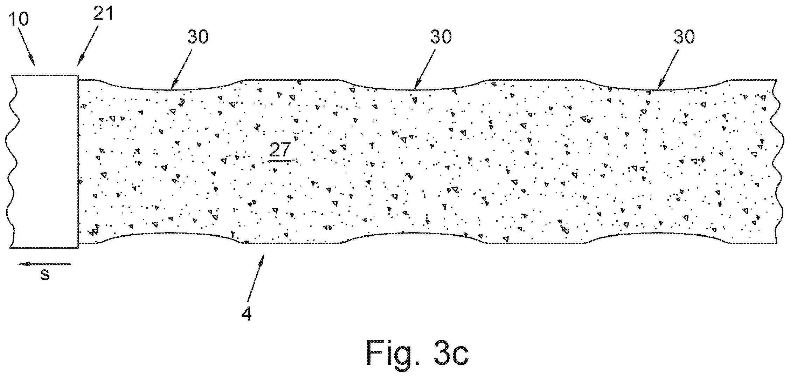

Another drawback with using the known tool 10 is the creation of an inconsistent connection between the bead of adhesive 4 and the application surface 5 as the tool 10 is moved along the adhesive deposition path 12. With reference to FIG. 3a, when the tool 10 is stationary or moved so as to apply the adhesive 27 at a low application rate, some of the adhesive 27 entering the chamber 26 is pushed downward, by the continuous flow of the adhesive 27, onto an area of the application surface 5 approximately below the supply channel 24 and extending rearwardly therefrom. The rest of the adhesive 27 generally flows forward to create the rounded nose 28, in which the adhesive 27 flows downward from the top portion 14 of the tool 10 to sit on the application surface 5. That is, the adhesive 27 at the base of the rounded nose 28 is not positively forced into but rests on the application surface 5, establishing a poorer connection therebetween when compared to the situation in which the adhesive 27 is pushed onto the application surface 5. This can lead to "dead areas" within the chamber 26, generally indicated by 29, in which the adhesive 27 continuously circulates without ever being laid down on the application surface 5. As the application rate increases, some of the adhesive 27 at the base of the rounded nose 28 is drawn under the tool 10, as shown in FIG. 3b, to form part of the bead of adhesive 4. Nevertheless, the difference in the pressures under which the adhesive 27 is initially laid down on the application surface 5 between the front and rear sections of the tool 10 can lead to inconsistencies in the profile of the bead of adhesive 4. In particular, with reference to FIG. 3c, in sections where the connection between the adhesive 27 and the application surface 5 is poorer, the bead of adhesive 4 is pulled and stretched as it is dispensed from the tool 10. This causes its width to narrow, as generally indicated by 30, relative to those sections of the bead of adhesive 4 in which the connection between the adhesive 27 and the application surface 5 is comparatively better. The operator 3 is therefore required to correct these inconsistences in the profile once the bead of adhesive 4 has been laid down on the application surface 5 to ensure a reliable bonding of the shear web.

The invention seeks to overcome or substantially mitigate at least some of the drawbacks associated with the known tool 10.

In general terms, the adhesive deposition tools of the present disclosure are configured such that the cross-sectional area of the chamber, defined by a substantially vertical plane extending between lower and upper boundaries of the chamber, decreases towards a front region of the chamber. This is advantageous as it increases the pressure exerted by the adhesive on the boundaries of the chamber in that region of the chamber, comparative with the known tool, and, in doing so, improves the initial contact established between the adhesive and the application surface.

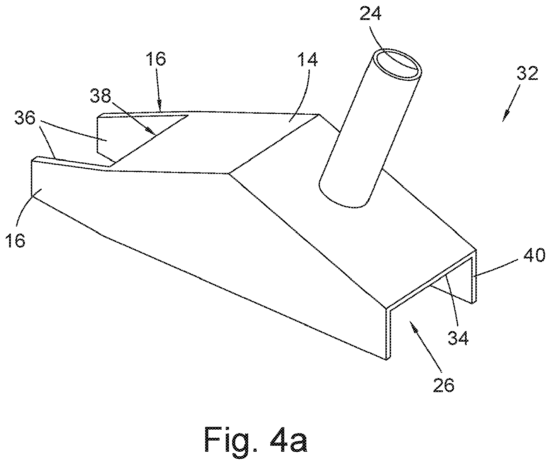

FIG. 4a shows an example of an adhesive deposition tool 32 comprising a top portion 14, two side portions 16 and a supply channel 24. An inner surface 34 of the top portion 14 defines the upper boundary of an open-ended chamber 26 within the volume of the tool 32, and inner surfaces 36 of the two side portions 16 respectively define side boundaries of the chamber 26. The chamber 26 comprises a front end 38 and a rear end 40, and, in use, the application surface 5, onto which structural adhesive is deposited from the tool 32, defines the lower boundary of the chamber 26.

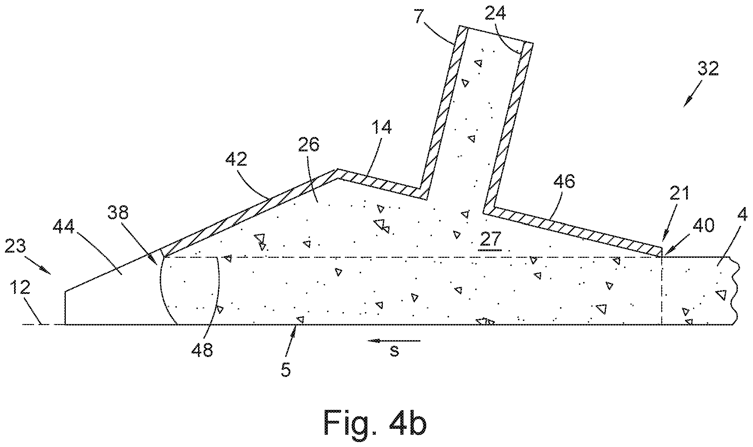

With reference to FIG. 4b, the tool 32 is operated in substantially the same way as the known tool 10. That is, adhesive 27 is supplied to the chamber 26 through the supply channel 24.The adhesive may be allowed to largely fill the chamber 26 before the tool 32 is moved by the operator 3 along the adhesive deposition path 12 in the direction S. As the tool 32 is moved, the adhesive 27 exits the tool 32 from the rear end 40 of the chamber 26 to form a bead of adhesive 4 on the application surface 5. The supply channel 24 may be defined by an elongate handle 7. The elongate handle 7 may be configured to extend rearwardly away from a front end 23 of the tool 32. The operator 3 may use the elongate handle 7 to move to tool 32 along the adhesive deposition path 12.

The top portion 14 is configured such that the height of the chamber 26 decreases towards the front end 38 of the chamber 26, resulting in a progressive decrease in the cross-sectional area of the chamber 26 towards its front end 38. Specifically, the top portion 14 comprises a first baffle 42 downwardly pitched towards the front end 23 of the tool 32. This arrangement reduces the volume of chamber 26 towards its front end 38 This may restrict the flow of the adhesive 27 towards the front end 38, preventing the formation of a large rounded nose of adhesive. The arrangement of the first baffle 42 may increase the pressure exerted by the adhesive 27 on the boundaries of the chamber 26 in that region of the chamber 26 (when compared with the known tool 10). This pressure increase pushes the adhesive 27 onto the application surface 5 below the front end 38 of the chamber 26, improving the connection that is initially established therebetween. The decrease in the cross-sectional area of the chamber 26 towards the front end 38 may also increase the uniformity of the pressure along the chamber 26 under which the adhesive 27 is initially laid down on the application surface 5 before it exits from the rear end 40 of the chamber 26 to form the bead of adhesive 4. The improvement in the initial contact formed between the adhesive 27 and the application surface 5 eliminates inconsistences in the profile of the bead of adhesive 4 brought about by the pulling or stretching of the adhesive 27 as it exits the tool 32.

The top portion 14 comprises a second baffle 46. The second baffle 46 is downwardly pitched towards a rear end 21 of the tool 32 so as to decrease the height of the chamber 26 towards its rear end 40. Downwardly pitching the second baffle 46 towards the rear end 21 of the tool 32 may progressively decreases the cross-sectional area of the chamber 26 towards its rear end 40. This arrangement reduces the volume of the chamber 26 towards its rear end 40 which may restrict the flow of adhesive 27 thereto. Reducing the volume of the chamber 26 towards its rear end 40 may cause a pressure in that region of the chamber 26 to be exerted on the adhesive, similar to the pressure applied at the front end 38, thereby improving the uniformity of the pressure under which the adhesive 27 is initially laid down on the application surface 5.

In this example, the height of the chamber 26 at its front and rear ends 38, 40 is substantially equal. This arrangement serves to promote the formation of a stratum or layer of adhesive 27, the upper region of which is generally indicated by line 48, immediately above the application surface 5, which flows unimpeded from the front end 38 of the chamber 26 to the rear end 40. The stratum of adhesive 27 is continuously resupplied with the entrainment of adhesive 27 entering the chamber 26 as the tool 32 is moved along the adhesive deposition path 12. This helps to prevent the formation of dead areas of recirculating adhesive 27 within the chamber 26, thereby minimising waste.

Such dead areas of adhesive 27 are also avoided by ensuring that the cross-sectional area of the chamber 26 continuously decreases towards the front and rear ends 38, 40 of the chamber 26, as opposed to decreasing over a series of intermittent steps that could give rise to pockets of recirculating adhesive 27 within the chamber 26. For example, in the present example, the second baffle 46 is configured such that the height of the chamber 26, and so the cross-sectional area of the chamber 26, continuously decreases towards the rear end 40 of the chamber 26. The top potion 14 is also configured such that the height of the chamber 26 continuously decreases towards the front end 38 of the chamber 26 through the use of the first baffle 42.

More specifically, the top portion 14, through the combination of the first and second baffles 42, 46, may be configured such that the height of the chamber 26 increases and subsequently decreases in the direction of the front end 38 of the chamber 26. This initial increase in the height contributes to an overall increase in the volume of the chamber 26 in comparison to the known tool 10. Moreover, the overall length of the tool 32 is at least 180mm, which is more than the length of the known tool 10. Specifically, the overall length of the tool 32 of this example is 280mm. This too contributes to a comparative increase in the volume of the chamber 26, providing the advantage of the tool 32 being able to accommodate an increased amount of adhesive 27 within the chamber 26 during use. A chamber which has a larger volume will hold an increased volume of adhesive, and this helps the operator provide a consistent bead of adhesive.

The side portions 16 may be substantially parallel and since the height of the chamber 26 at its front and rear ends 38, 40 may be substantially equal, the cross-sectional areas of the front and rear ends 38, 40 may also be substantially equal. Accordingly, the pressure exerted by the adhesive 27 on the boundaries of the front and rear regions of the chamber 26 is considerably equal, further improving the uniformity of the pressure under which the adhesive 27 is initially laid down on the application surface 5.

The side portions 16 may forwardly extend ahead of the front end 38 of the chamber 26 defining a channel 44 located ahead of the chamber 26. The channel 44 is used to collect any excess adhesive 27 that might spill from the front end 38 of the chamber 26 in the event the supply rate exceeds the application rate of the adhesive 27. This arrangement prevents adhesive 27 from spilling around and being drawn in underneath the leading edges of the side portions 16, between the bottom surfaces of the side portions 16 and the application surface 5, as the tool 32 is moved along the adhesive deposition path 12.

Moreover, the channel 44 also provides the operator 3 a visual indication, during use, on whether the application rate of adhesive 27 needs to be altered. Ideally, the operator 3 would be able to see adhesive 27 at the front end 38 of the chamber 26, indicating that the chamber 26 is full of adhesive 27, as the bead of the adhesive 4 is laid down, but the existence of excess adhesive 27 in the channel 44 could be an indication that the application rate of the adhesive 27 needs to be increased relative to the supply rate.

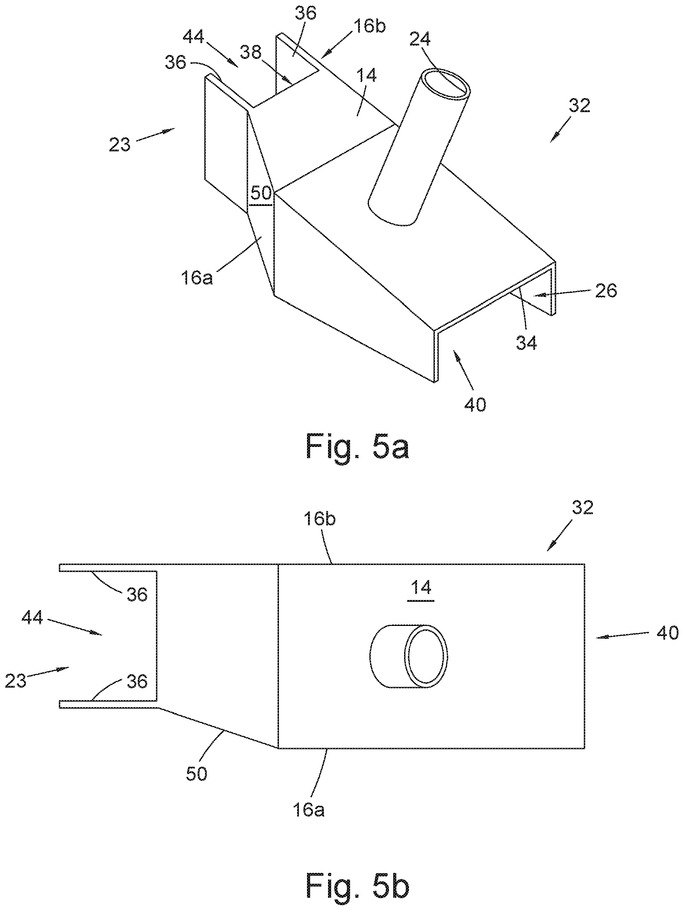

FIGs. 5a and 5b show another example of an adhesive deposition tool 32 comprising a top portion 14, two side portions 16a, 16b and a supply channel 24. An inner surface 34 of the top portion 14 defines the upper boundary of an open-ended chamber 26 within the volume of the tool 32, and inner surfaces 36 of the two side portions 16a, 16b respectively define side boundaries of the chamber 26. The chamber 26 comprises a front end 38 and a rear end 40, and, in use, the application surface 5, onto which structural adhesive is deposited from the tool 32, defines the lower boundary of the chamber 26.

This example differs from the previous example of the tool 32 in that one of the side potions 16a, 16b is configured such that the width of the chamber 26 decreases towards the front end 38 of the chamber 26, which provides the progressive decrease in the cross-sectional area of the chamber 26 towards its front end 38. Specifically, the side potion 16a comprises a baffle 50 inwardly pitched towards the front end 23 of the tool 32. This arrangement reduces the volume of chamber 26 towards its front end 38, which restricts the flow of adhesive 27 thereto and increases the pressure exerted by the adhesive 27 on the boundaries of the chamber 26 in that region of the chamber 26 relative to the known tool 10. This increase in pressure pushes the adhesive 27 onto the application surface 5 below the front end 38 of the chamber 26, improving the connection that is initially established therebetween and increasing the uniformity of the pressure under which the adhesive 27 is initially laid down on the application surface 5 before it exits from the rear end 40 of the chamber 26 to form the bead of adhesive 4.

The other side portion 16b may be straight. This is particularly advantageous if, during use, the tool 32 is being guided along the adhesive deposition path 12 using a physical guide as it maximises the contact between the tool 32 and the physical guide, ensuring the stability of the tool 32 as it is moved along the adhesive deposition path 12 by the operator 3. In an alternative example, the outer surface of the side portion 16a comprising the baffle 50 may also be straight, so it too can be used to achieve maximum contact between the tool 32 and a physical guide during use.

The side portions 16a, 16b may forwardly extend ahead of the front end 38 of the chamber 26 defining a channel 44 located ahead of the chamber 26. As with the previous example, the channel 44 is used to collect any excess adhesive 27 that might spill from the front end 38 of the chamber 26 in the event the supply rate exceeds the application rate of the adhesive 27. This arrangement prevents adhesive 27 from being drawn in underneath the side portions 16 as the tool 32 is moved along the adhesive deposition path 12 and also provides the operator 3 a visual indication, during use, on whether the application rate of adhesive 27 needs to be changed.

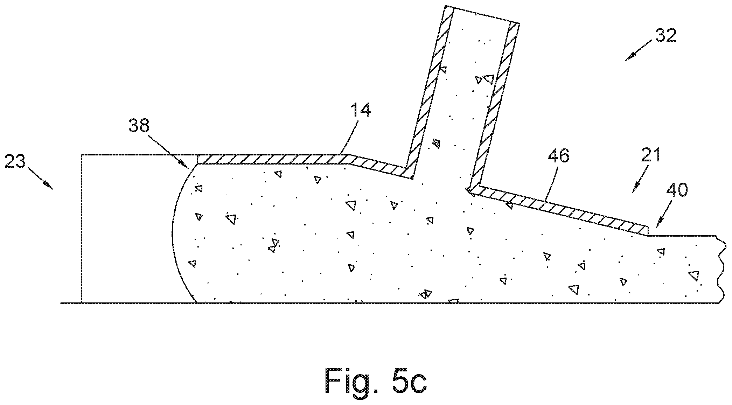

With reference to FIG. 5c, the top portion 14 comprises a baffle 46 downwardly pitched towards the rear end 21 of the tool 32 so as to decrease the height of the chamber 26 towards its rear end 40, resulting in a progressive decrease in the cross-sectional area of the chamber 26 towards its rear end 40. This arrangement reduces the volume of chamber 26 towards its rear end 40, restricting the flow of adhesive 27 thereto.

The height of the chamber 26 at its front end 38 is greater than at its rear end 40. However, due to the inwardly pitched baffle 50 on the side potion 16a, the cross-sectional areas of the front and rear end 38, 40 of the chamber 26 are substantially equal. This has the advantage that the pressure exerted by the adhesive 27 on the boundaries of the front and rear regions of the chamber 26 is considerably equal, improving the uniformity of the pressure under which the adhesive 27 is initially laid down on the application surface 5.

It will be appreciated that various changes and modifications can be made to the tool 32 without departing from the scope of the invention as defined in the appended claims.

For example, one of the examples shown includes a top portion 14 configured such that the height of the chamber 26 decreases towards the front end 38 of the chamber 26, and the other example shows a side potion 16a configured such that the width of the chamber 26 decreases towards its front end 38. However, other examples/ variants of the tool 32 are envisaged in which the top portion 14 and at least one of the side portions 16a, 16b are configured such that both the height and width of the chamber 26 concurrently decrease in order to reduce the cross-sectional area of the chamber 26 towards its front end 38.

Similarly, it will be appreciated by the skilled reader that the cross-sectional area at the front and rear ends 38, 40 of the chamber 26 need not be substantially equal. The tool 32 may be configured such that the cross-sectional area at the front end 38 of the chamber 26 is smaller than the cross-sectional area at the rear end 40. Such a configuration may be used, for example, when one wishes to increase the pressure applied by the adhesive 27 to the front region of the tool 32 relative to its rear region. Alternatively, the tool 32 may be configured such that the cross-sectional area at the front end 38 of the chamber 26 is greater than the cross-sectional area at the rear end 40. This configuration may be used, for example, to prevent a situation in which the flow of adhesive 27 towards the front end 38 of the chamber 26 is overly restricted, preventing the chamber 26 from filling completely, as might occur when the adhesive 27 is supplied at a low temperature, and so an increased viscosity. In both situations, however, the uniformity of the pressure under which the adhesive 27 is applied to the application surface 5 along the length of the tool 32 is improved when compared with the known tool 10.

It will also be appreciated by the skilled reader that the baffles 42, 46, 50, used to restrict the flow of adhesive 27 within the chamber 26, do not necessarily need to be straight, but could instead comprise a non-straight profile, provided that the height and/or width of the chamber 26 decreases towards the front end 38 or, in the case of the second baffle 26, the rear end 40 of the chamber 26. For example, one or more of the baffles 42, 26, 50 might have a convex profile tapering towards the front or rear end 38, 40, which could aid the development of the stratum of adhesive 27 at the bottom of the chamber 26 and also help to prevent the formation of "dead areas" of adhesive 27 within the chamber 26.

Moreover, the tool 32 may further comprise an adhesive profiler located at its rear end 21 having a cut-out profile portion, defining the rear end 40 of the chamber 26, for profiling the bead of adhesive 4. The adhesive profiler might form part of a suite of interchangeable adhesive profilers. In which case, the tool 32 comprises a means for receiving an interchangeable adhesive profiler for altering the profile of the bead of adhesive 4 as the adhesive 27 is deposited from the tool 32.

## Claims

1. An adhesive deposition tool (32) for applying a bead of structural adhesive (4) onto an application surface (5) of a wind turbine blade component, the tool comprising:
a top portion (14) defining an upper boundary of an open-ended chamber (26), the chamber comprising a front end (38) and a rear end (40), the rear end being the end from which adhesive is deposited onto the surface when the tool is moved along the surface;
two side portions (16) defining side boundaries of the chamber; and,
a supply channel (24) for supplying adhesive to the chamber,
wherein the top portion (14) and/or at least one side portion (16) is configured such that the height and/or the width of the chamber (26) decreases towards the front end of the chamber; **characterised in that**
the top portion (14) further comprises a baffle (46) downwardly pitched towards the rear of the tool so as to decrease the height of the chamber (26) towards the rear end of the chamber.

2. An adhesive deposition tool according to claim 1, wherein the top portion (14) comprises a first baffle (42) downwardly pitched towards the front of the tool.

3. An adhesive deposition tool according to claim 1 or 2, wherein the at least one side portion (16) comprises a baffle (50) inwardly pitched towards the front of the tool.

4. An adhesive deposition tool according to any preceding claim, wherein the side portions (16) forwardly extend ahead of the front end of the chamber (26).

5. An adhesive deposition tool according to claim 1, wherein the height of the chamber (26) at the front and rear ends of the chamber is substantially equal.

6. An adhesive deposition tool according to claim 1, wherein the cross-sectional areas of the front and rear ends of the chamber (26) are substantially equal.

7. An adhesive deposition tool according to any preceding claim 1, wherein the cross-sectional area of the front end of the chamber (26) is smaller than the cross-sectional area of the rear end of the chamber.

8. An adhesive deposition tool according to any one of claims 1, wherein the baffle (46) of the top portion is configured such that the height of the chamber (26) continuously decreases towards the rear end of the chamber.

9. An adhesive deposition tool according to any preceding claim, wherein the top portion (14) and/or the at least one side portion (16) is configured such that the height and/or the width of the chamber (26) continuously decreases towards the front end of the chamber.

10. An adhesive deposition tool according to any preceding claim, wherein the top portion (14) and/or the at least one side portion (16) is configured such that the height and/or the width of the chamber (26) increases and subsequently decreases towards the front end of the chamber.

11. An adhesive deposition tool according to any preceding claim, further comprising a profiler having a cut-out profile portion.

12. An adhesive deposition tool according to claim 11, wherein the cut-out profile portion of the profiler defines the rear end (40) of the chamber.

13. An adhesive deposition tool according to any preceding claim, wherein the overall length of the tool is greater than 180mm.

## Patentansprüche

1. Klebstoffauftragswerkzeug (32) zum Aufbringen eines Wulstes aus Strukturklebstoff (4) auf eine Aufbringungsfläche (5) einer Windkraftanlagenblattkomponente, wobei das Werkzeug umfasst:
einen Kopfabschnitt (14), welcher eine obere Begrenzung einer Kammer (26) mit offenem Ende definiert, wobei die Kammer ein vorderes Ende (38) und ein hinteres Ende (40) umfasst, wobei das hintere Ende das Ende ist, von welchem aus Klebstoff auf die Oberfläche aufgetragen wird, wenn das Werkzeug entlang der Oberfläche bewegt wird;
zwei Seitenabschnitte (16), welche seitliche Begrenzungen der Kammer definieren; und
einen Zuführkanal (24) zum Zuführen von Klebstoff zu der Kammer,
wobei der Kopfabschnitt (14) und/oder zumindest ein Seitenabschnitt (16) so konfiguriert ist, dass die Höhe und/oder die Breite der Kammer (26) zu dem vorderen Ende der Kammer hin abnimmt; **dadurch gekennzeichnet, dass**
der Kopfabschnitt (14) weiter eine Ablenkplatte (46) umfasst, welche nach unten zu der Rückseite des Werkzeugs hin geneigt ist, um die Höhe der Kammer (26) in Richtung des hinteren Endes der Kammer zu verringern.

2. Klebstoffauftragswerkzeug nach Anspruch 1, wobei der Kopfabschnitt (14) eine erste Ablenkplatte (42) umfasst, welche nach unten zu der Vorderseite des Werkzeugs hin geneigt ist.

3. Klebstoffauftragswerkzeug nach Anspruch 1 oder 2, wobei der zumindest eine Seitenabschnitt (16) eine Ablenkplatte (50) umfasst, welche nach innen zu der Vorderseite des Werkzeugs hin geneigt ist.

4. Klebstoffauftragswerkzeug nach einem vorstehenden Anspruch, wobei sich die Seitenabschnitte (16) nach vorne über das vordere Ende der Kammer (26) hinaus erstrecken.

5. Klebstoffauftragswerkzeug nach Anspruch 1, wobei die Höhe der Kammer (26) an dem vorderen und hinteren Ende der Kammer im Wesentlichen gleich ist.

6. Klebstoffauftragswerkzeug nach Anspruch 1, wobei die Querschnittsflächen des vorderen und hinteren Endes der Kammer (26) im Wesentlichen gleich sind.

7. Klebstoffauftragswerkzeug nach einem vorstehenden Anspruch 1, wobei die Querschnittsfläche des vorderen Endes der Kammer (26) kleiner ist als die Querschnittsfläche des hinteren Endes der Kammer.

8. Klebstoffauftragswerkzeug nach einem der Ansprüche 1, wobei die Ablenkplatte (46) des Kopfabschnitts so konfiguriert ist, dass die Höhe der Kammer (26) zu dem hinteren Ende der Kammer hin kontinuierlich abnimmt.

9. Klebstoffauftragswerkzeug nach einem vorstehenden Anspruch, wobei der Kopfabschnitt (14) und/oder der zumindest eine Seitenabschnitt (16) so konfiguriert ist, dass die Höhe und/oder die Breite der Kammer (26) zu dem vorderen Ende der Kammer hin kontinuierlich abnimmt.

10. Klebstoffauftragswerkzeug nach einem vorstehenden Anspruch, wobei der Kopfabschnitt (14) und/oder der zumindest eine Seitenabschnitt (16) so konfiguriert ist, dass die Höhe und/oder die Breite der Kammer (26) zunimmt und anschließend zu dem vorderen Ende der Kammer hin abnimmt.

11. Klebstoffauftragswerkzeug nach einem vorstehenden Anspruch, weiter einen Profiler mit einem ausgeschnittenen Profilabschnitt umfassend.

12. Klebstoffauftragswerkzeug nach Anspruch 11, wobei der ausgeschnittene Profilabschnitt des Profilers das hintere Ende (40) der Kammer definiert.

13. Klebstoffauftragswerkzeug nach einem vorstehenden Anspruch, wobei die Gesamtlänge des Werkzeugs mehr als 180 mm beträgt.

## Revendications

1. Outil de dépôt d'adhésif (32) pour appliquer un cordon d'adhésif structurel (4) sur une surface d'application (5) d'un composant de pale d'éolienne, l'outil comprenant :
une partie supérieure (14) définissant une limite supérieure d'une chambre à extrémité ouverte (26), la chambre comprenant une extrémité avant (38) et une extrémité arrière (40), l'extrémité arrière étant l'extrémité à partir de laquelle l'adhésif est déposé sur le surface lorsque l'outil est déplacé le long de la surface ;
deux parties latérales (16) définissant des limites latérales de la chambre ; et,
un canal d'alimentation (24) pour amener un adhésif jusqu'à la chambre,
dans lequel la partie supérieure (14) et/ou au moins une partie latérale (16) sont configurées de telle sorte que la hauteur et/ou la largeur de la chambre (26) diminuent vers l'extrémité avant de la chambre ; **caractérisé en ce que**
la partie supérieure (14) comprend en outre un déflecteur (46) incliné vers le bas vers l'arrière de l'outil de manière à diminuer la hauteur de la chambre (26) vers l'extrémité arrière de la chambre.

2. Outil de dépôt d'adhésif selon la revendication 1, dans lequel la partie supérieure (14) comprend un premier déflecteur (42) incliné vers le bas vers l'avant de l'outil.

3. Outil de dépôt d'adhésif selon la revendication 1 ou 2, dans lequel la au moins une partie latérale (16) comprend un déflecteur (50) incliné vers l'intérieur vers l'avant de l'outil.

4. Outil de dépôt d'adhésif selon une quelconque revendication précédente, dans lequel les parties latérales (16) s'étendent vers l'avant devant l'extrémité avant de la chambre (26).

5. Outil de dépôt d'adhésif selon la revendication 1, dans lequel la hauteur de la chambre (26) au niveau des extrémités avant et arrière de la chambre est sensiblement égale.

6. Outil de dépôt d'adhésif selon la revendication 1, dans lequel les aires en coupe transversale des extrémités avant et arrière de la chambre (26) sont sensiblement égales.

7. Outil de dépôt d'adhésif selon la revendication 1, dans lequel l'aire en coupe transversale de l'extrémité avant de la chambre (26) est plus petite que l'aire en coupe transversale de l'extrémité arrière de la chambre.

8. Outil de dépôt d'adhésif selon la revendication 1, dans lequel le déflecteur (46) de la partie supérieure est configuré de telle sorte que la hauteur de la chambre (26) diminue de manière continue vers l'extrémité arrière de la chambre.

9. Outil de dépôt d'adhésif selon une quelconque revendication précédente, dans lequel la partie supérieure (14) et/ou la au moins une partie latérale (16) sont configurées de telle sorte que la hauteur et/ou la largeur de la chambre (26) diminuent de manière continue vers l'extrémité avant de la chambre.

10. Outil de dépôt d'adhésif selon une quelconque revendication précédente, dans lequel la partie supérieure (14) et/ou la au moins une partie latérale (16) sont configurées de telle sorte que la hauteur et/ou la largeur de la chambre (26) augmentent et, par la suite, diminuent vers l'extrémité avant de la chambre.

11. Outil de dépôt d'adhésif selon une quelconque revendication précédente, comprenant en outre un profileur présentant une partie profilée découpée.

12. Outil de dépôt d'adhésif selon la revendication 11, dans lequel la partie profilée découpée du profileur définit l'extrémité arrière (40) de la chambre.

13. Outil de dépôt d'adhésif selon une quelconque revendication précédente, dans lequel la longueur totale de l'outil est supérieure à 180 mm.
